# EUROPÄISCHE PATENTSCHRIFT

(11) **EP 0 683 032 B1**
(45) Veröffentlichungstag und Bekanntmachung des Hinweises auf die Patenterteilung: **03.01.2001**
(21) Anmeldenummer: 94116366.9
(22) Anmeldetag: 18.10.1994
(51) Int. Cl.: B29D 23/00, B29C 69/00, B29C 65/02, F16L 11/00

(54) **Vorrichtung zum Herstellen einer Rohr-In-Rohr-Leitung**
Apparatus for manufacturing coaxial conduit
Dispositif pour la fabrication de conduits coaxiaux

(30) Priorität: 20.10.1993 DE 4335722
(43) Veröffentlichungstag der Anmeldung: 22.11.1995
(73) Patentinhaber: Hewing GmbH, 48607 Ochtrup (DE)
(72) Erfinder: Höffker, Bruno, D-48432 Rheine (DE)
(74) Vertreter: Hilleringmann, Jochen, Dipl.-Ing.

(56) Entgegenhaltungen:
- AU-A- 5 605 280
- BE-A- 545 527
- DE-A- 3 338 071
- DE-A- 3 702 585
- DE-A- 3 704 380
- GB-A- 2 016 109
- US-A- 2 554 356
- US-A- 3 086 335
- US-A- 3 306 959
- US-A- 3 654 028
- PATENT ABSTRACTS OF JAPAN vol. 008, no. 140 (M-305), 29.Juni 1984 & JP 59 039516 A (SUMITOMO KEIKINZOKU KOGYO KK), 3.März 1984,

## Beschreibung

Die Erfindung betrifft eine Vorrichtung zum Herstellen einer Rohr-In-Rohr-Leitung, bestehend aus mindestens einer vorzugsweise flexiblen Versorgungsleitung, wie z.B. Elektroleitung oder Lichtwellenleitung und insbesondere einem mediumführenden Innenrohr, die bzw. das mit Spiel von einem insbesondere flexiblen Kunststoff-Außenrohr umgeben ist, wie aus DE-A-33 38 071 bekannt.

Rohr-In-Rohr-Leitungen mit einem wasserführenden Innenrohr und einem dieses mit Spiel umgebenden (Kunststoff-) Außenrohr werden beispielsweise bei Warmwasser-Zentralheizungsanlagen als Vor- und Rücklaufleitungen verwendet, die unter Putz oder im Estrich verlegt sind und die Heizkörper mit Vorlauf- und Rücklaufverteiler verbinden. Eine derartige Warmwasser-Zentralheizungsanlage ist beispielsweise aus DE 20 38 991 C3 bekannt. Rohr-In-Rohr-Leitungen bieten den Vorteil des einfachen Austausches des Innenrohres bzw. der von dem Außenrohr umgebenden Versorgungsleitung, wenn die Rohr-In-Rohr-Leitung unter Putz oder im Estrich verlegt ist. Das Außenrohr bei derartigen Rohr-In-Rohr-Leitungen hat einerseits Schutzfunktion, andererseits aber auch Isolationsfunktion.

Die Herstellung von Rohr-In-Rohr-Leitungen für Heizungsanlagen gestaltete sich in der Vergangenheit recht aufwendig und arbeitskraftintensiv. Es wurden nämlich voneinander getrennt zunächst das mediumführende Innenrohr und das Außenrohr, bei dem es sich zumeist um ein gewelltes Rohr handelt, hergestellt. Beide Rohre wurden nach der Herstellung auf Spulen aufgewickelt. Tn einem von der Herstellung der Rohre separaten Verfahrensschritt wurde dann das Innenrohr in das Außenrohr eingezogen. Hierzu waren Laufstrecken von typischerweise 50 bis 100 m erforderlich. Das Außenrohr wird auf die Laufstreckenlänge abgeschnitten und durch diesen Abschnitt des Außenrohres wird zunächst ein Zugseil hindurchgezogen, das mit dem einzuziehenden Innenrohr verbunden war. Neben dem arbeitskräftemäßigen Aufwand war auch ein hoher Maschinen- bzw. Materialaufwand erforderlich, denn es traten große Kräfte auf, die zum Einziehen des Innenrohres in das Außen- bzw. Leerrohr zu überwinden waren. Ferner waren bei dem bekannten Herstellungsverfahren für Rohr-In-Rohr-Leitungen von Nachteil, daß der Prozeß nicht kontinuierlich im Durchlaufverfahren erfolgen konnte.

Rohr-In-Rohr-Leitungen werden auch für elektrische oder optische Versorgungsleitungen eingesetzt. Die Einführung von Glasfaserkabel erfolgt dabei vor Ort durch ein luftunterstütztes Einschießen der Kabel in das bereits (im Graben) verlegte Leerrohr, das zwecks Reibungsreduktion auf seiner Innenseite profiliert ist. Allerdings besteht bei dieser "Einschießtechnik" dennoch die Gefahr einer Beschädigung der hitzeempfindlichen Glasfaserkabel.

In DE-A-37 04 380 ist eine Vorrichtung zum kontinuierlichen Herstellen einer Rohr-In-Rohr-Leitung mit wärmeisoliertem Innenrohr beschrieben. Dabei wird ein gewelltes Außenrohr aufgeschlitzt und aufgeweitet, um darin ein von einer Abstandshaltevorrichtung gehaltenes Innenrohr einzulegen. Zusätzlich wird in das Außenrohr noch einschäumbarer Kunststoff eingebracht, der den Ringraum zwischen Innenrohr und Abstandshaltevorrichtung einerseits und Außenrohr andererseits ausfüllt, wenn das Außenrohr wieder verschlossen ist. Zum Verschließen ist eine Schweißvorrichtung vorgesehen.

In DE-A-37 02 585 ist eine Anlage beschrieben, in der ein Innenrohr mit einer auf dieses aufschrumpfenden Außenisolation aus Schaumstoff versehen wird. Der Außenisolations-Schaumstoffmantel besteht aus einem thermoplastischen Kunststoff. Der Mantel wird extrudiert und anschließend aufgeschlitzt, um das Innenrohr einzulegen. Danach wird der Schaumstoffmantel verschweißt, wobei er außen an dem Innenrohr anliegt. Bei all diesen Vorgängen weist der Schaumstoff eine Temperatur oberhalb der Gasübergangstemperatur des Kunststoffs auf, so daß der verschweißte Schaumstoffmantel bei Abkühlung fest auf das Innenrohr aufschrumpft.

Schließlich ist aus DE-A-33 38 071 eine Vorrichtung zum Herstellen einer Rohr-in-Rohr-Leitung bekannt, die die Merkmale des Oberbegriffs des Anspruchs 1 aufweist. Bei dieser bekannten Vorrichtung wird das aufgeschlitzte Außenrohr nach dem Einlegen eines mediumführenden Innenrohres mit Hilfe eines thermischen Schwertes, an dem die Schlitzränder entlanggleiten, kontinuierlich längsverschweißt.

Probleme können bei beiden bekannten Verfahren und Vorrichtungen beim Verschweißen des Außenrohres auftreten, wenn die in das Außenrohr einzubringenden Versorgungsleitungen und/oder anderen Materialien hitzempfindlich sind.

Der Erfindung liegt die Aufgabe zugrunde, eine Vorrichtung zur Herstellung von Rohr-In-Rohr-Leitungen zu schaffen, mit der sich auch temperaturempfindliche Versorgungsleitungen und/oder andere in das Außenrohr einzubringende Materialien oder Elemente verarbeiten lassen.

Zur Lösung dieser Aufgabe schlägt die Erfindung eine Vorrichtung mit den Merkmalen des Anspruchs 1 vor; die Merkmale vorteilhafter Weiterbildungen der Erfindung sind jeweils in den Unteransprüchen angegeben.

Die erfindungsgemäße Vorrichtung basiert auf dem Prinzip des Einbringens des Innenrohres in das Außenrohr durch seitliches Einlegen. Ein axiales Hindurchziehen bzw. Einziehen des Innenrohres in das Außenrohr ist nicht vorgesehen. Damit vereinfacht sich die Konfektionierung der Rohr-In-Rohr-Leitung ganz entscheidend, da nunmehr im Durchlaufbetrieb kontinuierlich gearbeitet werden kann. Auch was den apparativen Aufbau anbelangt, sind wesentliche Vorteile zu verzeichnen. So sind beispielsweise großvolumige Antriebsvorrichtung mit großen Antriebskräften, wie sie beim Einziehen eines Innenrohres in ein Außenrohr erforderlich sind, nicht mehr vonnöten. Mit der Erfindung wird also ein Vorschlag für eine Vorrichtung unterbreitet, mit der sich das Umgeben einer Versorgungsleitung bzw. eines mediumführenden Innenrohres durch ein Außen- oder Schutzrohr wesentlich vereinfachen läßt, und zwar on-line.

Nach der Erfindung ist vorgesehen, das Außenrohr aufzutrennen, indem ein in Richtung der Längsachse verlaufender Schlitz o.dgl. Auftrennung in die Wandung des Außenrohres eingebracht wird. Die Art der Auftrennung des Außenrohres in im wesentlichen dessen axialer Richtung ist unerheblich, sofern gewährleistet ist, daß sich das Außenrohr später wieder möglichst einfach und problemlos verschließen läßt. Das derart behandelte bzw. vorbehandelte Außenrohr wird nun radial aufgeweitet, so daß sich eine axiale schlitz- bzw. spaltartige Wandungsöffnung bildet. In das auf diese Weise radial geöffnete Außenrohr wird nun von außen und von der Seite die Versorgungsleitung eingelegt. Danach wird die Wandungsöffnung wieder geschlossen. Zum Auftrennen des Außenrohres wird vorzugsweise eine Auftrennvorrichtung eingesetzt, die die Wandung des Außenrohres in Bezug auf den Umfang an einer Stelle auftrennt. Dieser Auftrennvorgang erfolgt vorzugsweise bei feststehender Auftrennvorrichtung und relativ dazu bewegtem Außenrohr. Die Aufweitung des aufgetrennten Außenrohres erfolgt in einer Aufweitungsvorrichtung, durch die bzw. in der das Außenrohr so weit geöffnet wird, daß durch seine axiale Wandungsöffnung die Versorgungsleitung in das Außenrohr einlegbar ist.

Das Verschließen des Außenrohres erfolgt vorteilhafterweise durch Verschweißen, Verkleben, Auf-Stoß-Legen oder Überlappen der einander gegenüberliegenden Ränder der Wandung, die die Wandungsöffnung begrenzen. Bevorzugt eingesetzt wird eine Verschließvorrichtung, in der eine der oben beschriebenen Arten des Verschließens ausgeführt wird. Bei der Verschließvorrichtung der erfindungsgemäßen Vorrichtung handelt es sich um eine Schweißvorrichtung. Zwischen der Wärmequelle der Verschließvorrichtung und der bereits eingelegten Versorgungsleitung befindet sich eine Wärmeabschirmvorrichtung. Diese ist kühlmitteldurchflossen und/oder gibt Wärme durch Konvektion und/oder Strahlung ab.

Bei der Hitzeabschirmung handelt es sich um ein Kühlrohr mit gekühlter Wandung, das die Versorgungsleitung vollständig umgibt und zwischen dieser und dem Außenrohr angeordnet ist. Die Kühlmittelzuführ- und Kühlmittelabführleitungen verlaufen in ihrem Anschlußbereichen an dem Kühlrohr vorzugsweise radial zu diesem und parallel zueinander. Durch geeignete Halterung der Zuführ- und Abführleitungen läßt sich das gesamte Kühlrohr in Position halten. In geringem radialem Abstand zum Kühlrohr ist die Flachdüse angeordnet, deren Spaltöffnung parallel zur Erstreckung des geradlinigen Kühlrohres verläuft. Damit ist das Außenrohr bzw. dessen die Wandungsöffnung begrenzenden Ränder über die Länge der Spaltöffnung der Heißluft ausgesetzt. Die Heißluft beeinträchtigt nicht die bereits in das Außenrohr eingelegte Versorgungsleitung, die vor der Hitze abgeschirmt durch das beidseitig offene mit gekühlter (Hohl-Wandung) versehene geradlinige Kühlrohr hindurch bewegt wird.

Mit der Erwärmung der die Wandungsöffnung begrenzenden Ränder des Außenrohres durch Heißluft ist eine Reduktion von Reibung verbunden, verglichen mit dem Fall, in dem die Ränder des Außenrohres an einem Heizelement gleitend vorbeigeführt werden. Ferner läßt sich der Prozess des Einlegens der Versorgungsleitung in das Außenrohr beschleunigt und bei höheren Geschwindigkeiten durchführen. Schließlich bietet die Hitzeabschirmung ausreichend Schutz vor stark aufgeheizter Heißluft, die zur Erzielung hoher Produktionsgeschwindigkeiten und damit zur Erzielung eines Verschließens des Außenrohres bei hohen Produktionsgeschwindkeiten erforderlich ist. Aufgrund dieser Hitzeabschirmung läßt sich die erfindungsgemäße Vorrichtung auch zum Einlegen von Glasfaserkabeln in Außen- bzw. Leerrohre einsetzen; bekanntlich sind Glasfaserkabel relativ hitzeempfindlich.

Die Vorzüge der erfindungsgemäßen Vorrichtung werden insbesondere dann deutlich, wenn man sich vor Augen führt, daß sich die Vorrichtung in unmittelbarem Anschluß an die Herstellung des Außenrohres bzw. der Versorgungsleitung einsetzen läßt. Eine Zwischenspeicherung der Versorgungsleitung bzw. des Außenrohres auf beispielsweise großvolumige Spulenkörper o.dgl. Vorratseinrichtungen ist nicht mehr erforderlich. Derartige Vorratseinrichtungen sind allenfalls für die je nach Einsatz der Versorgungsleitung gebotenen Eigenschaften erforderlich. Handelt es sich beispielsweise bei der Versorgungsleitung um ein mediumführendes, nämlich wasserführendes Innenrohr aus Kunststoff, so sollte dieser Kunststoff zwecks Erhöhung seiner Beständigkeit vernetzt sein. Wird die Vernetzung durch Strahlung hervorgerufen, so bietet es sich an, das Innenrohr zunächst auf einen Spulenkörper aufzuwickeln und den Wickel in Gänze strahlenzuvernetzen. Es sind allerdings auch andere Arten der Vernetzung beispielsweise die Peroxid-Vernetzung bekannt, die durchaus im Durchlaufbetrieb erfolgen kann. Hier kann dann wiederum auf eine Zwischenspeicherung des Innenrohres verzichtet werden. Die Frage, ob die erfindungsgemäße Vorrichtung direkt nach der Herstellung von Versorgungsleitung und Außenrohr einsetzbar ist, hängt davon ab, ob die Produktionsgeschwindigkeiten von Versorgungsleitung und Außenrohr gleich den Verarbeitungsgeschwindigkeiten sind, die bei Einsatz der erfindungsgemäßen Vorrichtung erzielbar sind. Je nach den Beschaffenheiten von Versorgungsleitung und Außenrohr ist es unter Umständen nicht möglich, nach der Herstellung der Versorgungsleitung und/oder des Außenrohres direkt erfindungsgemäß weiterzuverfahren. Unter Umständen wird also aus diesen Gründen ein Zwischenspeicher erforderlich sein.

Für die Erfindung grundsätzlich unerheblich ist die Tatsache, ob ein Außenrohr verwendet wird, das bereits aufgetrennt ist oder das erst kurz vor der Aufweitung aufgetrennt wird. Insofern benötigt die erfindungsgemäße Vorrichtung lediglich eine Aufweitungsvorrichtung zum Aufweiten des aufgetrennten Außenrohres unter Bildung der axialen Wandungsöffnung, durch die hindurch die Versorgungsleitung in das Außenrohr einlegbar ist.

Grundsätzlich spielt es auch keine Rolle, wieviel Versorgungsleitungen in das Außenrohr eingebracht werden. Letztendlich hängt die Anzahl der Versorgungsleitungen von deren Größe und von dem Innendurchmesser des Außenrohres ab. Die Versorgungsleitungen können entweder gleichzeitig oder sukzessive eingebracht werden, wobei es ferner denkbar ist, daß die axiale Wandungsöffnung, die sich durch Aufweitung des Außenrohres einstellt, zum sukzessiven Einführen sämtlicher Versorgungsleitungen offengehalten wird, oder ob das Außenrohr für jede einzulegende Versorgungsleitung aufs neue aufgeweitet und damit geöffnet wird.

Vorzugsweise erfolgt unmittelbar vor der Aufweitung die Auftrennung des Außenrohres, und zwar durch Aufschlitzen desselben. Zu diesem Zweck ist gemäß einer zweckmäßigen Weiterbildung der Erfindung vorgesehen, daß das Außenrohr gegen die Schneidkante eines feststehenden Messers einer Schneidvorrichtung bewegt wird, wobei die Schneidkante in zur Bewegung des Außenrohres entgegengesetzter Richtung zeigt. Ebenfalls denkbar aber ist es, bei feststehendem Außenrohr die Schneidkante relativ zum Außenrohr zu bewegen, wobei dann die Schneidkante in Bewegungsrichtung der Schneidvorrichtung weist.

Für die On-line-Herstellung, also die insbesondere kontinuierliche Herstellung im Durchlaufbetrieb ist es zweckmäßig, wenn die Versorgungsleitung und das Außenrohr beim Aufweiten des Außenrohres, beim Einlegen der Versorgungsleitung in das Außenrohr und beim Schließen des Außenrohres bewegt werden, und zwar bei im wesentlichen gleichen Geschwindigkeiten. Sofern unmittelbar vor der Aufweitung des Außenrohres dessen Auftrennung erfolgt, so erfolgt dies durch eine Auftrennvorrichtung (z.B. Schneidvorrichtung), wobei auch bei diesem Auftrennvorgang das Außenrohr bewegt wird.

In vorteilhafter Weiterbildung der Erfindung wird das Außenrohr im Anschluß an seine Herstellung aufgetrennt und zwecks Einlegen der Versorgungsleitung aufgeweitet. Hierbei bestimmt also die Herstellungsgeschwindigkeit des Außenrohres die Arbeitsgeschwindigkeit der erfindungsgemäßen Vorrichtung. Alternativ dazu kann die Versorgungsleitung in unmittelbarem Anschluß an ihre Herstellung in das aufgeweitete Außenrohr eingelegt werden. Für die Geschwindigkeit, mit der die erfindungsgemäße Vorrichtung arbeitet, ist hierbei also die Herstellungsgeschwindigkeit der Versorgungsleitung maßgebend. Diese beiden Ausführungsbeispiele zeigen, daß sich nach der Erfindung entweder die Herstellung des Außenrohres oder die Herstellung der Versorgungsleitung on-line fortsetzen läßt.

Vorteilhafterweise besteht das Außenrohr aus insbesondere thermoplastischem Kunststoff. Aufgrund des Memory-Effekts dieses Kunststoffs hat das aufgetrennte Außenrohr nach der Aufweitung das Bestreben, wieder seine geschlossene Rohrform anzunehmen. Damit bedarf es einen aktiven Verformens nach der Aufweitung nicht, um die bei der Aufweitung beabstandeten Wandungsränder zwecks deren Verbindung zusammenzuführen. Je nach Beschaffenheit und Material des Außenrohres kann eine solche aktive Verformung zum Verschließen der Wandungsöffnung nach Einlegen der Versorgungsleitung erforderlich sein.

In vorteilhafter Weiterbildung der Erfindung ist ferner vorgesehen, daß das aufgetrennte Außenrohr gegen einen Aufweitungsdorn bewegt und über diesen geschoben wird. Vorzugsweise trägt der Aufweitungsdorn auch das (feststehende) Messer der Schneidvorrichtung. Im Anschluß an den Aufweitungsdorn ist gemäß einer weiteren vorteilhaften Ausgestaltung der Erfindung eine Offenhaltevorrichtung angeordnet, die das durch den Aufweitungsdorn aufgeweitete Außenrohr offenhält und die einander gegenüberliegenden Wandungsränder auf Abstand hält. Bei der Offenhaltevorrichtung handelt es sich vorzugsweise um voneinander beabstandete Halteteile, die bis in die Wandungsöffnung hineinragen und in axialer Richtung des Außenrohres verlaufen und durch die hindurch die Versorgungsleitung zum Einlegen in das Außenrohr hindurchgeführt wird. Die Offenhaltevorrichtung kann aber auch aus einem hohlzylindrischen oder im Querschnitt U-förmigen Teil bestehen, das eine axial verlaufende Öffnung aufweist, die mit der Wandungsöffnung fluchtet, wenn das Außenrohr über das hohlzylindrische Teil geschoben wird. Dieses Bauteil ist dann im Anschluß an den Aufweitungsdorn angeordnet.

Vorteilhafterweise werden die Versorgungsleitung und das Außenrohr von einer Antriebsvorrichtung synchron bewegt. Diese Antriebsvorrichtung ist mit Antriebsrollen für die Versorgungsleitung einerseits und für das Außenrohr andererseits versehen.

In weiterer vorteilhafter Ausgestaltung der Erfindung ist eine Zusammenführvorrichtung zum Zusammenführen der die Wandungsöffnung begrenzenden Ränder des Außenrohres vorgesehen. Eine derartige Zusammenführvorrichtung ist stets dann erforderlich und geboten, wenn das Außenrohr nicht aus einem elastischen Material mit Rückstelleigenschaften besteht.

Bei Verwendung eines Kunstoff-Außenrohres läßt sich dieses zweckmäßigerweise durch Erhitzen der Ränder der Wandöffnung und anschließendes Zusammenfügen der infolge der Erhitzung aufgeweichten Ränder verschließen. Als Wärme- oder Heizquelle kommt insbesondere ein Heizelement in Frage, an dem die Öffnungsränder in Kontakt mit dem Heizelement vorbeigeführt werden. Die Temperatur des Heizelementes, dessen Erstreckung in Bewegungsrichtung des Außenrohres und die Bewegungsgeschwindigkeit des Außenrohres werden derart vorgegeben, daß die Ränder der Wandungsöffnung nach dem Verlassen des Heizelementes derart ausreichend erwärmt und aufgeweicht sind, daß ein anschließendes Zusammenführen der Ränder zwecks Herstellung eines innigen Verbundes gewährleistet ist.

In Bezug auf eine Reduktion der Reibungskräfte ist es zweckmäßig, die Erwärmung der Ränder der Wandungsöffnung durch Heißluft zu bewerkstelligen. Zwischen der Heißluftquelle und den zu erwärmenden Rändern der Wandungsöffnung, d.h. dem Außenrohr ist zweckmäßigerweise eine Flachdüse mit spaltartiger Öffnung angeordnet, die in unmittelbarer Nähe des Außenrohres angeordnet ist.

Selbstverständlich ist es auch möglich, das Außenrohr durch Auftragen von Schweißmaterial zu verschließen. Hier sei insbesondere an eine Schweißvorrichtung zum Schweißen einer Längsnaht gedacht.

Bei all den zuvor beschriebenen Prozessen zum Verschließen des Außenrohres nach dem Einlegen der Versorgungsleitung ist darauf zu achten, daß die Versorgungsleitung durch die Hitzeentwicklung zum Zusammenschmelzen des Außenrohres keinen Schaden erleidet. Deshalb werden das noch geöffnete Außenrohr und die bereits in dieses eingelegte Versorgungsleitung erfindungsgemäß an einer Hitzeabschirmung vorbeigeführt. Im einfachsten Fall wird es sich bei dieser Hitzeabschirmung um einen vorzugsweise gewölbten und sich in Transportrichtung des Außenrohres erstreckenden Materialstreifen, der zwischen der Wandungsöffnung und der Versorgungsleitung angeordnet ist und der von innen an dem Außenrohr anliegt. In dieser Konstellation übernimmt die Hitzeabschirmung zusätzlich auch noch die Funktion des Auf-Abstand-Haltens der zu verbindenden Wandungsöffnungsränder. Eine derartige Hitzeabschirmung läßt sich problemlos im Anschluß an die Offenhalte-Vorrichtung anordnen, die Hitzeabschirmung wird zweckmäßigerweise von Halteteilen gehalten, die sich ausgehend von der Hitzeabschirmung durch die Wandungsöffnung hindurch erstrecken, wenn das Außenrohr sich über die Hitzeabschirmung bewegt.

Um das aufgeschlitzte Außenrohr nach dem Aufheizen seiner Wandungsöffnungsränder exakt wieder zusammen zu führen, wird im Falle eines Wellrohres zweckmäßigerweise eine Wellrohr-Formmaschine eingesetzt. Eine derartige Maschine weist zwei umlaufende Ketten von einzelnen gelenkig miteinander verbundenen Formteilen auf, wobei die beiden Ketten zu beiden Seiten des Wellrohres angeordnet sind und mit ihren Formteilen in einem Abschnitt von deren Bewegungsweg einander gegenüberliegend verlaufen. Diese Formteile, die der Außenkontur des Wellrohres entsprechende Profilierungen aufweisen, verzahnen sich mit der bereits vorhandenen Wellenstruktur des Außenrohres und transportieren dieses. Durch synchrone Steuerung beider Formteilketten wird eine exakte Zusammenführung mit exakt auf-stoß-liegenden Wandungsöffnungsrändern ohne axialen Versatz zwischen diesen erreicht.

Neben einem mediumführenden Innenrohr, das von einer Wärmeisolation umgeben sein kann, läßt sich in das Außenrohr auch nocheine Ortungsleitung einbringen. Diese bietet den Vorzug der (berührungslosen) Ortung des verlegten Außenrohres. Das Außenrohr selbst kann gewellt sein und insbesondere einen Rund- oder Mehrkant-, insbesondere Vierkant-Querschnitt aufweisen.

Nachfolgend wird anhand der Figuren ein Ausführungsbeispiel der Erfindung näher erläutert. Im einzelnen zeigen:
- Fign. 1 bis 3: schematisiert die einzelnen Stationen einer On-Line-Fertigungslinie für Rohr-In-Rohr-Leitungen, wobei gemäß Fig. 1 das Innenrohr (Versorgungsleitung) und das Außenrohr jeweils auf Vorratsspulen aufgewickelt sind, gemäß Fig. 2 lediglich das Innenrohr auf einer Vorratsspule aufgewickelt und das Außenrohr im Anschluß an seine Herstellung der erfindungsgemäßen Vorrichtung zugeführt wird und gemäß Fig. 3 sowohl das Innenrohr als auch das Außenrohr jeweils unmittelbar nach deren Herstellung der erfindungsgemäßen Vorrichtung zugeführt werden,
- Fig. 4: eine perspektivische Ansicht des Hauptbestandteils einer Vorrichtung zur kontinuierlichen on-line Rohr-In-Rohr-Leitungs-Herstellung,
- Fig. 5: einen Längsschnitt durch den in Fig. 4 perspektivisch dargestellten Teil der Vorrichtung,
- Fig. 6: einen Schnitt entlang der Linie VI-VI der Fig. 5,
- Fig. 7: einen Schnitt entlang der Linie VII-VII der Fig. 5,
- Fig. 8: einen horizontalen Längsschnitt durch das Außenrohr, welches mittels einer Verschließvorrichtung gemäß einem alternativen Ausführungsbeispiel verschlossen wird,
- Fig. 9: eine Seitenansicht der Verschließvorrichtung und der Transportvorrichtung gemäß Fig. 8,
- Fig. 10: ein Schnitt durch die Verschließvorrichtung entlang der Linie X-X der Fig. 9 und
- Fig. 11: ein Schnitt durch die Transportvorrichtung entlang der Linie XI-XI der Fig. 9.

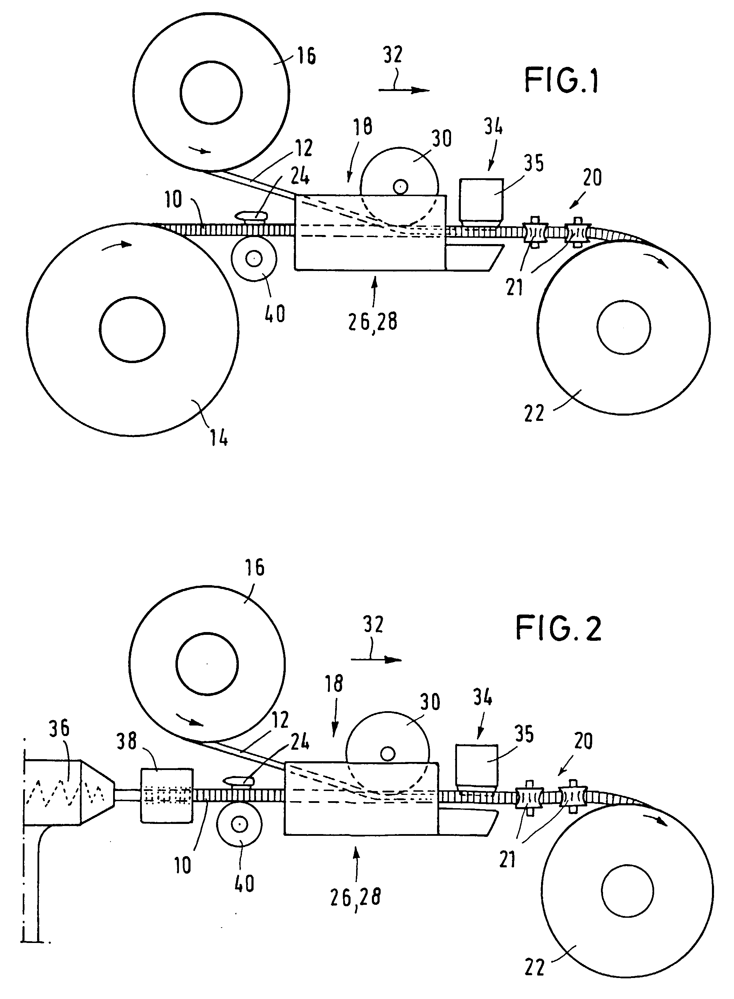

Das Verfahren zum kontinuierlichen Herstellen einer Rohr-In-Rohr-Leitung ist in Fig. 1 stark schematisiert dargestellt. Die Rohr-In-Rohr-Leitung besteht aus einem gewellten Schutz- oder Außenrohr 10 aus Kunststoff, in das ein mediumführendes Innenrohr 12 ebenfalls aus Kunststoff, beispielsweise vernetztem Polyethylen, eingelegt wird. Sowohl das Außenrohr 10 als auch das Innenrohr 12 sind auf drehbar gelagerten Spulen 14,16 aufgewickelt und bevorratet. Das gewellte Außenrohr 10 wird durch eine später noch näher zu beschreibende Vorrichtung 18 hindurchgeführt, in der in das Außenrohr 10 das Innenrohr 12 eingelegt wird. Als im Verfahrensprozeß letzte Station weist die Vorrichtung 18 eine Antriebseinheit 20 auf, die mit zwei der Wellenstruktur des Außenrohres 10 entsprechend profilierten Antriebsrollen 21 oder einer Vielzahl davon versehen ist. Als Antriebseinheit kann hier auch eine handelsübliche Wellrohr-Formmaschine eingesetzt werden. Anschließend wird das jetzt mit dem Innenrohr 12 versehene Außenrohr 10 auf eine Aufnahmespule 22 aufgewickelt. Als im Prozeßablauf erste Station weist die Vorrichtung 18 eine Schneidvorrichtung 24 auf, die feststehend ist und gegen die das Außenrohr 10 bewegt wird. Die Schneidvorrichtung 24 ist mit einer in zur Bewegung des Außenrohres 10 entgegengesetzter Richtung weisenden Schneidkante versehen, die die Wandung des Außenrohres 10 aufschlitzt. An die Schneidvorrichtung 24 schließt sich die Aufweitungs- und Offenhaltevorrichtung 26,28 an. In der Aufweitungsvorrichtung 26 wird das zuvor aufgeschlitzte Außenrohr 10 aufgeweitet, bis sich der durch die Schneidvorrichtung 24 erzeugte Schlitz in der Wandung des Außenrohres 10 so weit verbreitert hat, daß in das nun offene Außenrohr 10 das Innenrohr 12 in radial einwärts gerichteter Richtung eingelegt und eingeführt werden kann. Zu diesem Zweck ist das Innenrohr 12 über eine Führungsrolle 30 der Vorrichtung 18 geführt, die unmittelbar oberhalb des Außenrohres 10 über der Wandungsöffnung angeordnet ist und das Innenrohr 12 sozusagen in das Außenrohr 10 hinein umlenkt. Die Offenhaltevorrichtung 28 hat die Aufgabe, das aufgeweitete Außenrohr offenzuhalten, so daß von der Seite das Innenrohr 12 eingelegt werden kann. Im - in Prozeßfolge gemäß Pfeil 32 gesehen - nächsten Schritt hinter der Offenhaltevorrichtung 28 wird das Außenrohr 10 von einer Verschließvorrichtung 34 in Form eines Heizelements 35 wieder verschlossen. Das mit Heipatronen betriebenen Heizelement 35 ragt in das noch offene Außenrohr 10 hinein, wobei seine Öffnungsränder an dem Heizelement 35 anliegen und sich infolge dieses Wärmekontaktes erhitzen. Das derart behandelte und mit dem Innenrohr 12 versehene Außenrohr 10 wird dann von den Antriebsrollen 21 der Antriebsvorrichtung 20 transportiert und auf die Aufnahmespule 22 aufgewickelt.

Fig. 2 zeigt eine Anordnung für den Fall, daß der Schneidvorrichtung 24 direkt das hergestellte Außenrohr 10 zugeführt wird. Das Außenrohr 10 wird also nicht wie bei Fig. 1 zwischengespeichert und auf eine Vorratsspule aufgewickelt, sondern das den Extruder 36 und die diesem nachgeschaltete Wellenstruktur-Erzeugungsvorrichtung 38 verlassende Außenrohr 10 wird vielmehr direkt der Schneidvorrichtung 24 zugeführt. Gegebenenfalls ist das Außenrohr 10 zwischen der Wellenstruktur-Erzeugungsvorrichtung 36 und der Schneidvorrichtung 24 von Stützrollen 40 gestützt. Im übrigen entspricht dann das Verfahren gemäß Fig. 2 demjenigen gemäß Fig. 1.

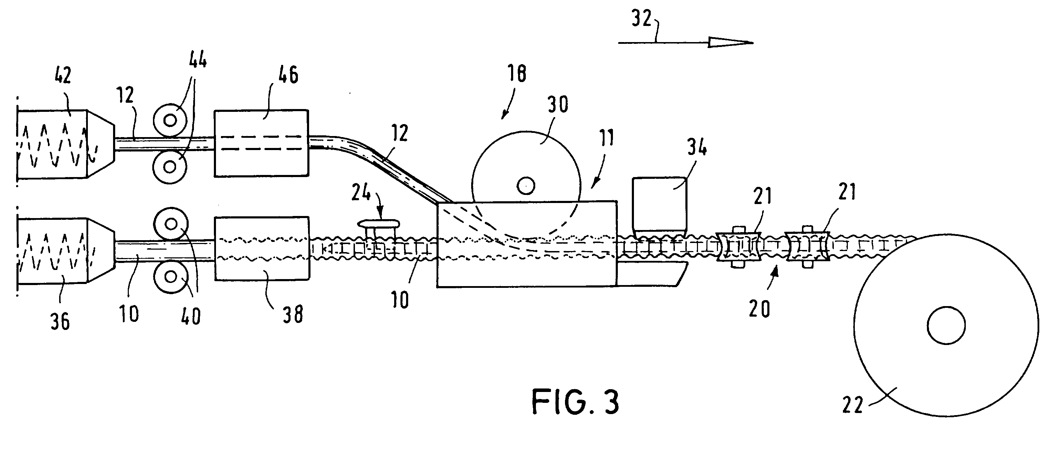

Fig. 3 zeigt schließlich ein Schema, bei dem sowohl das Außenrohr 10 als auch das Innenrohr 12 on-line hergestellt und zur Rohr-In-Rohr-Leitung weiterverarbeitet werden. Der Extruder 42 erzeugt das Kunststoff-Innenrohr 12, das über Rollen 44 geführt, einer weiteren Verarbeitungseinheit, beispielsweise einer Peroxid-Vernetzungsstation 46 zugeführt wird, aus der es heraus zur Vorrichtung 18 zugeführt wird. Im übrigen entspricht der Ablauf und Aufbau dem in Fig. 2 Gezeigten.

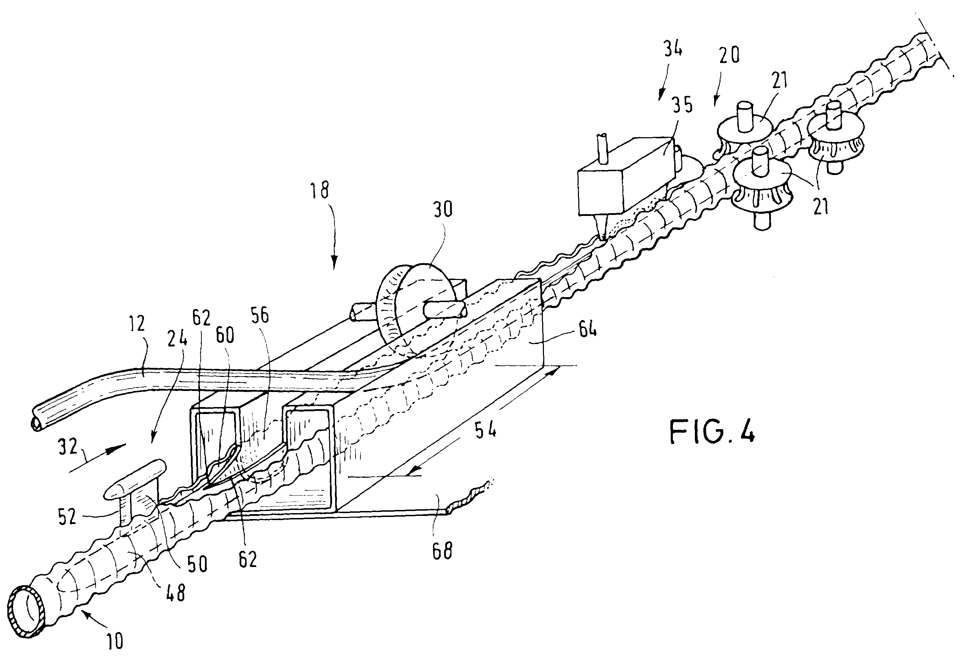

In Fig. 4 ist perspektivisch eine genauere Darstellung der Vorrichtung 18 wiedergegeben. Die Vorrichtung 18 weist einen Aufweitungsdorn 48 auf, der einen konischen Abschnitt aufweist, der sich in Bewegungsrichtung des Außenrohres 10 (s. Pfeil 32 der Fig. 4) im Durchmesser vergrößert, der in seinem konischen Abschnitt ein radial abstehendes aufragendes Messer 50 trägt, dessen Schneidkante 52 entgegengesetzt zur durch den Pfeil 32 angedeuteten Bewegungsrichtung des Außenrohres 10 weist. Das Außenrohr 10 wird über den feststehenden Aufweitungsdorn 48 bewegt und geschoben und dabei auch gegen die Schneidkante 52 des Messers 50 bewegt. Als Folge davon wird die Wandung des Außenrohres 10 aufgeschlitzt. Die Konizität des Aufweitungsdorns 48 setzt sich - in Bewegungsrichtung des Außenrohres 10 betrachtet (Pfeil 32) - noch hinter der Schneidkante 52 fort. In diesem Bereich hinter dem Messer 50 ist der Dorn 48 in seiner Form über den Rest seiner axialen Länge im wesentlichen unverändert. D.h. in diesem Abschnitt ist keine Durchmesserzunahme zu verzeichnen. Dafür jedoch ist der Dorn 48 in diesem Abschnitt (in Fig. 4 bei 54 angedeutet) ausgehöhlt, was bei 56 angedeutet ist. Der Aufweitungsdorn 48 gleicht in seinem Abschnitt 54 einem Hohlzylinder, der eine radiale Öffnung 58 aufweist, die sich in axialer Richtung über den Abschnitt 54 erstreckt. Der Durchmesser im Bereich 54 sowie die Breite der axial verlaufenden Öffnung 58 sind jeweils derart gewählt, daß das aufgeschlitzte Außenrohr 10 beim Bewegen über den Aufweitungsdorn 48 hinweg so weit aufgeweitet wird bzw. ist, daß die sich infolge der Aufschlitzung durch die Schneidkante 52 ergebende Öffnung 60 in der Wandung des Außenrohres 10 mit der Öffnung 58 fluchtet (s. Fig. 6). Die Öffnung 60 in der Wandung des Außenrohres 10 wird in Umfangsrichtung begrenzt durch die Öffnungsränder 62 des Außenrohres 10. Der axiale Abschnitt 54 des Aufweitungsdorn 48 hält diese beiden Öffnungsränder 62 auf Abstand, so daß sich die Wandöffnung 60 einstellt.

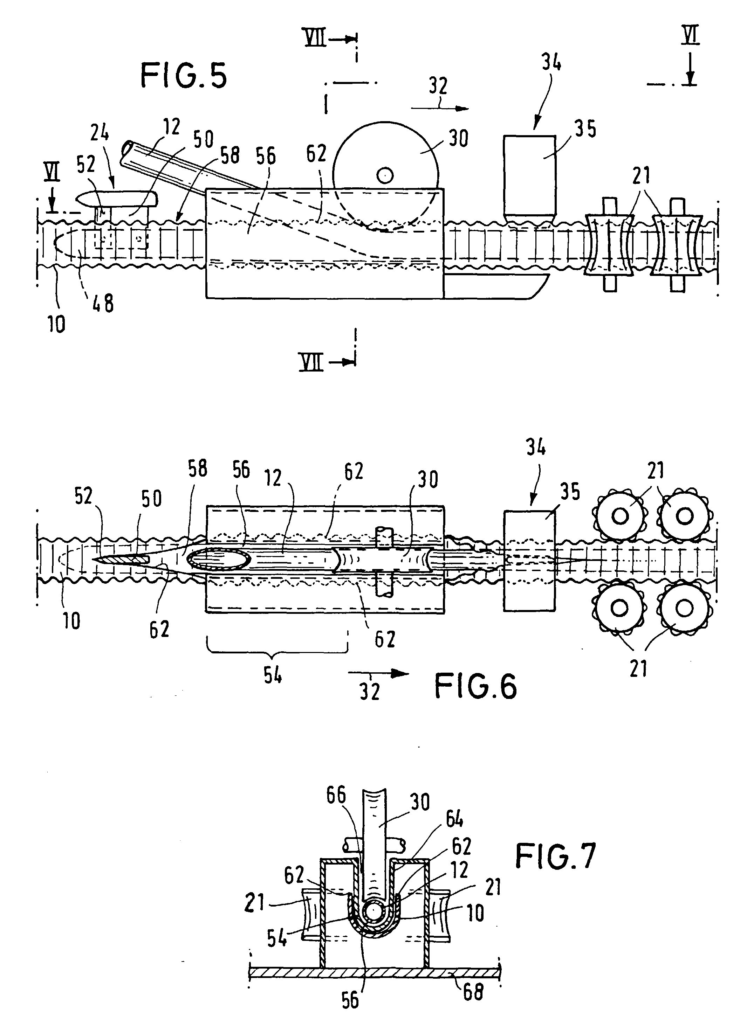

Wie anhand von Fig. 7 zu erkennen ist, weist der Aufweitungsdorn in seinem axialen Abschnitt 54 im wesentlichen eine U-Form auf. An die aufragenden Schenkel dieser U-Form schließen sich Führungselemente 64 an, die zwischen sich einen nach oben offenen Einführkanal 66 für das Innenrohr 12 bilden. Die Führungselemente 64 sind zu voneinander abweisenden Seiten abgewinkelt und nach nochmaliger 90°-Abwinklung mit einer Grundplatte 68 verbunden, die über die Führungselemente 64 den Aufweitungsdorn 48 in dessen Abschnitt 54 halten.

Der Aufweitungsdorn 48 ist in seinem Abschnitt zwischen der Schneidkante 52 und den Führungselementen 64 derart geformt, daß die im wesentlichen kreisrunde Form des Aufweitungsdorn in die im wesentlichen U-Form seines Abschnitts 54 kontinuierlich und stetig übergeht.

Unmittelbar oberhalb des im Querschnitt im wesentlichen U-förmigen Abschnitts 54 ist die Führungsrolle 30 angeordnet, entlang derer das Innenrohr 12 verläuft und in den U-förmigen von dem Abschnitt 54 umgebenen Raum 56 eingelegt wird. Derjenige Abschnitt des Aufweitungsdorns 48, in dem das über diesen geschobene Außenrohr 10 aufgeweitet wird, ist als Aufweitungsvorrichtung 26 zu betrachten, während der sich daran anschließende Abschnitt 54 die Offenhaltevorrichtung ist, die das geschlitzte und geöffnete Außenrohr 10 für eine bestimmte Dauer und Wegstrecke offenhält. Sicherlich sind auch andere Konstruktionen als die in den Figuren gezeigte denkbar als Offenhaltevorrichtung; so reicht es beispielsweise aus, wenn von oben in das geöffnete Außenrohr 10 Halteteile oder ähnliche Führungselemente eintauchen, ohne daß diese, wie im Beispiel der Figuren durch den Abschnitt 54 des Aufweitungsdorns 48 miteinander verbunden sind.

In Bewegungsrichtung des Außenrohres 10 betrachtet (s. Pfeil 32) hinter der Führungsrolle 30 endet der Abschnitt 54 des Aufweitungsdorns 48. Infolgedessen und wegen des Memory-Effekts von thermoplastischem Kunststoff ist das Außenrohr 10, wenn es bis hinter den Abschnitt 54 bewegt worden ist, bestrebt, sich wieder zu schließen. Gegebenenfalls durch entsprechende Führungsrollen läßt sich der Vorgang des Schließens, d.h. des Aneinanderlegens der Öffnungsränder 62 des Außenrohres 10 begünstigen bzw. unterstützen, bevor das Außenrohr 10 den Schweißkopf 35 der Verschließvorrichtung 34 erreicht. Nachdem das Außenrohr 10 an seiner Trennlinie verschweißt worden ist, gelangt es zu den Antriebsrollen 21, die es zusammen mit dem innenliegenden Innenrohr abziehen und weitertransportieren.

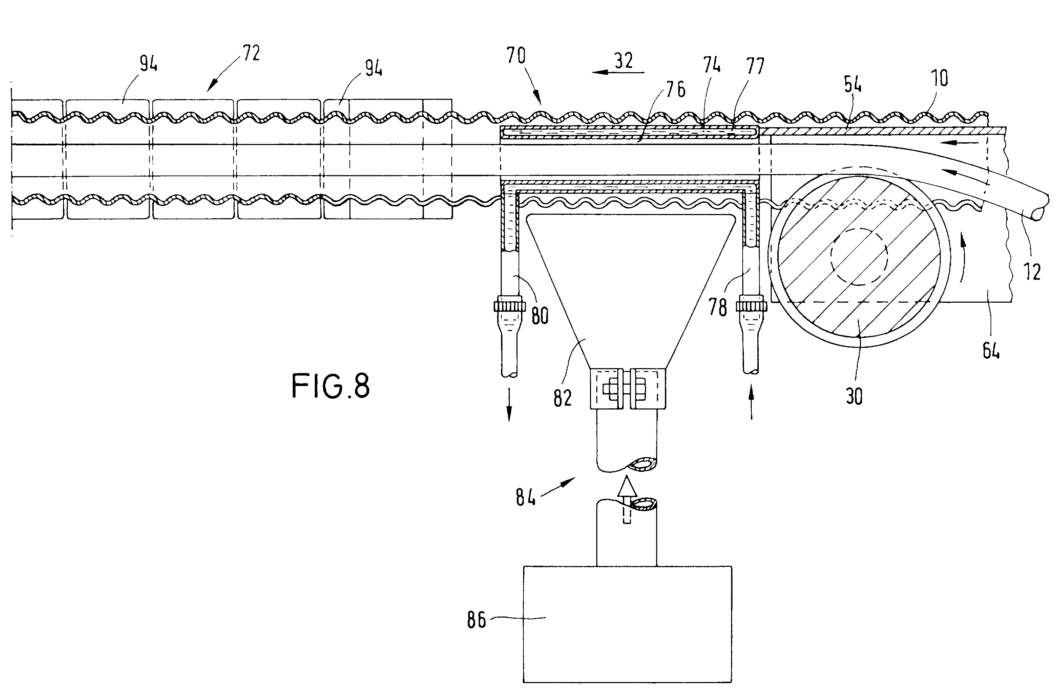

Eine alternative Ausführungsform für die Verschließvorrichtung zum Verschließen des geschlitzten Außenrohres 10 ist in den Fign. 8 bis 11 dargestellt. Diese Fign. zeigen darüberhinaus auch eine alternative Ausführungsform für die Transport- bzw. Antriebsvorrichtung, die, wie in Fign. 1 bis 7, in Bewegungsrichtung des Außenrohres 10 hinter der Verschließvorrichtung angeordnet ist.

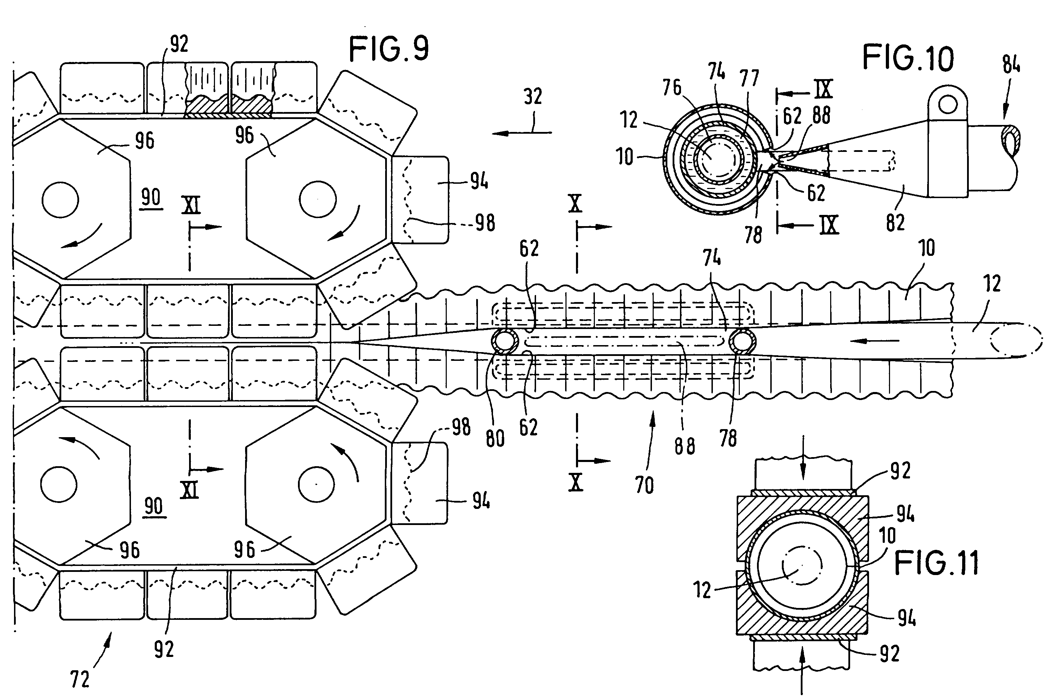

Fig. 8 zeigt einen Horizontal-Mittelschnitt durch die alternative Verschließvorrichtung 70 und die alternative Antriebsvorrichtung 72, während Fig. 9 diese beiden Anordnungen in Seitenansicht zeigt. Kernstück der Verschließvorrichtung 70 ist ein wassergekühltes Kühlhohlrohr 74, das einen beidseitig offenen axialen Innenhohlraum 76 und eine Hohlwandung 77 aufweist. Das wassergekühlte Kühlrohr 74 fluchtet mit dem U-förmigen, die Führungselemente 64 miteinander verbindenden Abschnitt 54 am Grund des Einführkanals 66, d.h. die dem Außenrohr 10 zugewandte Außenfläche dieses Abschnitts 54 geht in die Außenfläche des Kühlrohres 74 im wesentlichen über. Das Kühlrohr 74 ist über 360° geschlossen und an seinen stirnseitigen Enden offen. Wie in den Fign. 8 bis 10 dargestellt, verläuft das Außenrohr 10 außen um das Kühlrohr 74 herum, während das Innnrohr 12 innen durch das Kühlrohr 74 hindurchbewegt wird. Radial abstehend vom Kühlrohr 74 sind eine Kühlwasserzuleitung 78 und eine Kühlwasserableitung 80 angeschlossen. Diese beiden Leitungen sind mit dem Kühlrohr 74 in Höhe von dessen axialen Enden verbunden. Beide Leitungen 78,80 verlaufen parallel zueinander. Wenn das Außenrohr 10 und das Innenrohr 12 die Verschließvorrichtung 70 passieren, ist das Außenrohr 10 noch aufgeschlitzt und offengehalten. Das Außenrohr 10 wird gemäß den Fign. 9 und 10 durch das Kühlrohr 74 selbst bzw. dessen radiale Zuführ- und Abführleitungen 78,80 offengehalten.

Zwischen der Kühlwasserzuführleitung 78 und der Kühlwasserabführleitung 80 ist die Flachdüse 82 eines Heißluftgebläses 84 angeordnet, das eine Heißluftquelle 86 aufweist. Die Heißluftquelle 86 erzeugt einen stark erhitzten Luftstrom, der im wesentlichen über die Länge des Kühlrohres 74 verteilt auf dieses radial gerichtet wird (siehe Fig. 10). Für diese Heißluftverteilung in axialer Richtung des Kühlrohres 74 und radial auf dieses gerichtet sorgt die Flachdüse 78, deren spaltartige Austrittsöffnung 88 radial der Hohlwandung 74 gegenüberliegt. Die heiße Luft trifft auf die Wandungsöffnungsränder 62 des Außenrohres 10 auf und erhitzt diese, während das Außenrohr 10 and der Flachdüse 82 vorbeigeführt wird. Dabei ist das Innenrohr 12 durch das Kühlrohr 74 vor der Hitze der Heißluft geschützt, weshalb das Kühlrohr 74 eine Wärmeabschirmung für das Innenrohr 12 ist.

In Transportrichtung 32 von Außen- und Innenrohr 10,12 hinter der Verschließvorrichtung 70 ist die Antriebsvorrichtung 72 angeordnet, die als Wellrohr-Formvorrichtung 90 ausgebildet ist. Die Wellrohr-Formvorrichtung 90 weist gemäß Fig. 9 zwei umlaufende Ketten 92 von Formteilen 94 auf, die jeweils um ein paar Poligonal-Drehkörper 96 gelegt sind, von denen jeweils mindestens einer angetrieben ist. Die beiden Ketten 92 werden synchron angetrieben. In ihren einander zugewandten Abschnitten liegen sich die Formteile 94 gegenüber. Die Formteile 94 weisen eine profilierte Innenfläche 98 auf, die der Außenstruktur des Außenrohres 10 entspricht. An dem der Verschließvorrichtung 70 zugewandten, in Transportrichtung 32 forderen Ende der Wellrohr-Formvorrichtung 90 entsteht ein Einlaufbereich, der von einander gegenüberliegenden Formteilen 94 gebildet wird. Die in diesem Bereich einander gegenüberliegenden Formteile ergreifen zu beiden Seiten das Außenrohr 10 und führen es bei ihrer weiteren synchronen Bewegung Paßgenau zusammen, so daß die zuvor durch die heiße Luft "aufgeweichten" Wandöffnungsränder 62 des Außenrohres 10 zusammengdrückt werden und sich mit zunehmender Abkühlung verbinden. Im Unterschied zum normalen Einsatz einer Wellrohr-Formvorrichtung wird diese bei dem hier beschriebenen Ausführungsbeispiel zum Verschließen des gewellten Außenrohres 10 eingesetzt, wobei die Wellrohr-Formvorrichtung 90 nicht die Wellenstruktur des Außenrohres 10 erzeugt sondern vielmehr diese nutzt, um das Außenrohr 10 anzutreiben.

Die hier beschriebenen Verschließvorrichtung 70 hat den Vorteil, daß die Reibungskräfte, gegen die das Außenrohr 10 angetrieben werden muß, reduziert sind. Die Erhitzung der Wandöffnungsränder 62 erfolgt bei dieser Variante ausschließlich durch Heißluft, also nicht durch Wärmekontakt mit einem Heißelement, was Reibung bedeutet. Außerdem bietet das Kühlrohr 10 einen sicheren Schutz des Innenrohres 12 vor Hitzeeinwirkung, so daß sich mit der Verschließvorrichtung 70 auch empfindlichere Leitungen, wie beispielsweise Elektroleitungen, Glasfaserkabel in ein geschlitztes Außenrohr einlegen lassen.

In den Figuren, insbesondere in den Fign. 4 bis 7 und 8 bis 11 ist eine Vorrichtung zur On-Line-Herstellung von Rohr-In-Rohr-Leitungen im Durchlaufbetrieb beschrieben. Wesentliches Merkmal dabei ist das Öffnen des Außenrohres 10 durch Schaffung eines im wesentlichen in axialer Richtung sich erstreckenden Spalts (Öffnung 60) im Außenrohr 10, damit über diese Öffnung radial von außen bzw. radial unter einem spitzen Winkel das Innenrohr 12 eingelegt werden kann. Anschließend erfolgt das Verschließen des zuvor offenen Außenrohres 10. Die hier beschriebenen Vorrichtungen gestatten sowohl den stationären Einsatz in einer Fertigungshalle oder dergleichen als auch den mobilen Einsatz vor Ort, um die Rohr-in-Rohr-Leitung am Verlegungsort fertigen und umittelbar danach verlegen zu können.

## Patentansprüche

1. Vorrichtung zum Herstellen einer Rohr-In-Rohr-Leitung, bestehend aus mindestens einer vorzugsweise flexiblen Versorgungsleitung (12), insbesondere einem mediumführenden Innenrohr, die bzw. das mit Spiel von einem insbesondere flexiblen Kunststoff-Außenrohr (10) umgeben ist, mit
- einer Auftrennvorrichtung (24) zum Auftrennen der Wandung des Außenrohres (10) im wesentlichen in Richtung der Längsachse,
- einer Aufweitungsvorrichtung (26) zum Aufweiten des aufgetrennten Außenrohres (10) unter Bildung einer axialen Wandungsöffnung (60),
- einer Offenhaltevorrichtung (28) zum Offenhalten der axialen Wandungsöffnung (60) des Außenrohres (10), wobei durch die offengehaltene Wandungsöffnung (60) hindurch die mindestens eine Versorgungsleitung (12) in das Außenrohr (10) einlegbar ist, und
- einer Verschließvorrichtung (34) zum Verschließen der axialen Wandungsöffnung (60) des die mindestens eine Versorgungsleitung (12) umgebenden Außenrohres (10), wobei die Verschließvorrichtung (34;70) eine Wärmequelle (35;86) zum Erhitzen der die Wandungsöffnung (60) begrenzenden Ränder (62) des Außenrohres (10) aufweist,
**dadurch gekennzeichnet**
- daß die Verschließvorrichtung (34;70) ferner eine Wärmeabschirmvorrichtung (74) aufweist, die sich zumindest in dem Bereich zwischen der Wandungsöffnung (60) und der Versorgungsleitung (12) erstreckt und letztere gegen die Wärmequelle (86) abschirmt, wobei
- die Wärmequelle eine Heißluftquelle (86) ist,
- die Wärmeabschirmvorrichtung als Kühlhohlrohr (74) mit beidseitig offenem Innenhohlraum (76) und gekühlter Wandung (77) ausgebildet ist, an dem außen das das Kühlhohlrohr (74) umgebende, geöffnete Außenrohr (10) vorbei bewegbar ist und durch dessen Innenhohlraum (76) hindurch die Versorgungsleitung (12) bewegbar ist, und
- zwischen der Heißluftquelle (86) und der Wärmeabschirmung (74) eine Flachdüse (82) mit Spaltöffnung (8) vorgesehen ist, die parallel zur Wärmeabschirmvorrichtung (74) verläuft und im Abstand zu dieser angeordnet ist.

2. Vorrichtung nach Anspruch 1, dadurch gekennzeichnet, daß die Wärmeabschirmvorrichtung (74) von einem Kühlmedium durchflossen ist und/oder Wärmeenergie durch Konvektion und/oder Wärmestrahlung abgibt.

3. Vorrichtung nach Anspruch 1 oder 2, dadurch gekennzeichnet, daß die Wärmeabschirmvorrichtung (74) als Abschirmelement aus Metall ausgebildet ist.

4. Vorrichtung nach Anspruch 1, dadurch gekennzeichnet, daß die Wandung (77) des Kühlrohres (74) mit einer Kühlmediumzuführ- und eine Kühlmediumsabführleitung (78;80) verbunden ist, die beide radial zum Kühlrohr (70) führen und in diesem Bereich parallel zueinander verlaufen.

5. Vorrichtung nach einem der Ansprüche 1 bis 4, dadurch gekennzeichnet, daß die Verschließvorrichtung (34) eine Schweißvorrichtung (35) ist.

6. Vorrichtung nach einem der Ansprüche 1 bis 5, dadurch gekennzeichnet, daß die Auftrennvorrichtung (24) eine Schneidvorrichtung zum Aufschlitzen des Außenrohres (10) ist, die ein feststehendes Messer (50) mit einer Schneidkante (52) aufweist, relativ zu der das Außenrohr (10) bewegbar ist und die in zur Bewegung des Außenrohres (10) entgegengesetzte Richtung weist.

7. Vorrichtung nach einem der Ansprüche 1 bis 6, dadurch gekennzeichnet, daß die Offenhaltevorrichtung (28) voneinander beabstandet Halte- oder Führungsteile (64) mit einander abgewandten Flächen aufweist, an denen die die Wandungsöffnung (60) begrenzenden Ränder (62) des Außenrohres (10) anliegen und auf Abstand gehalten sind und zwischen denen hindurch die mindestens eine Versorgungsleitung (12) in das Außenrohr (10) einlegbar ist.

8. Vorrichtung nach einem der Ansprüche 1 bis 6, dadurch gekennzeichnet, daß die Aufweitungsvorrichtung (48) ein konischer Aufweitungsdorn ist, über den das Außenrohr (10) schiebbar ist, und daß die Halteteile (64) der Offenhaltevorrichtung (28) mit dem Aufweitungsdorn an dessen in Bewegungsrichtung (32) des Außenrohres (10) weisenden Ende verbunden sind.

9. Vorrichtung nach einem der Ansprüche 1 bis 6, dadurch gekennzeichnet, daß die Aufweitungsvorrichtung (48) einen Aufweitungsdorn mit einem konischen Aufweitungsabschnitt und einem weiteren Abschnitt (54) mit im wesentlichen gleichbleibender Gestalt aufweist und daß der weitere Abschnitte (54) eine axiale Öffnung (58) aufweist, wobei das aufgeweitete Außenrohr (10) unter Freihaltung dieser axialen Öffnung (58) den weiteren Abschnitt (54) umgibt.

10. Vorrichtung nach einem der Ansprüche 1 bis 9, dadurch gekennzeichnet, daß eine Zusammenführvorrichtung zum Zusammenführen der die Wandungsöffnung (60) begrenzenden Ränder (62) des Außenrohres (10) vorgesehen ist.

11. Vorrichtung nach einem der Ansprüche 1 bis 10, dadurch gekennzeichnet, daß das Außenrohr (10) gewellt ist und daß in Bewegungsrichtung (32) hinter der Aufweitungsvorrichtung (48) eine Wellrohr-Formmaschine (90) zum Bewegen des gewellten Außenrohres (10) und zum Zusammenführen sowie -halten der Ränder (62) der Wandungsöffnung (60) des gewellten Außenrohres (10) vorgesehen ist.

12. Vorrichtung nach einem der Ansprüche 1 bis 11, dadurch gekennzeichnet, daß das Außenrohr (10) einen Rund- oder einen Mehrkant-Querschnitt aufweist.

13. Vorrichtung nach einem der Ansprüche 1 bis 12, dadurch gekennzeichnet, daß in das Außenrohr (10) ein zur Medienführung vorgesehenes Innenrohr mit Wärmeisolation einlegbar ist.

14. Vorrichtung nach einem der Ansprüche 1 bis 12, dadurch gekennzeichnet, daß in das Außenrohr (10) zusätzlich zu einem zur Medienführung vorgesehenen Innenrohr (12) eine Ortungsleitung zum insbesondere berührungslosen Orten des verlegten Außenrohres (10) einlegbar ist.

## Claims

1. Device for manufacturing a pipe-in-pipe conduit comprising at least a preferably flexible supply line (12), in particular a medium-transporting inner pipe which is surrounded by a preferably flexible plastic outer pipe (10) with a play being provided, the device comprising:
- a severing device (24) for severing the wall of the outer pipe (10) generally in the direction of the longitudinal axis,
- an expanding device (26) for expanding the severed outer pipe (10) thus producing an axial opening (60) in the wall,
- a device (28) for keeping the axial opening (60) in the wall of the outer pipe (10) open with least one supply line (12) being adapted to be introduced via the kept-open opening (60) in the wall into the outer pipe (10), and
- a closing device (34) for closing the axial opening (60) in the wall of the outer pipe (10) surrounding the at least one supply line (12) with the closing device (34;70) comprising a heat source (35;86) for heating the edges (62) of the outer pipe (10) defining the opening (60) in the wall,
**characterized in that**
- the closing device (34;70) further comprises a heat shielding device (74) extending at least in the area between the opening in the wall (60) and the supply line (12) and shielding the latter from the heat source (86), wherein
- the heat source ist a hot air source (86),
- the heat shielding device is configured as hollow cooling pipe (74) with a hollow space (76) open at both ends and a cooled wall (77), wherein the open outer pipe (10) surrounding the hollow cooling pipe (74) is movable along the outside of the cooling pipe (74) and the supply line (12) is movable through the hollow space (76) of the cooling pipe (74), and
- a flat nozzle (82) with a gap-type opening (8) is provided between the hot air source (86) and the heat shielding device (74), the flat nozzle (82) extending parallel to the heat shielding device (74) and being arranged in a spaced relationship to the latter.

2. Device according to claim 1, characterized in that a cooling medium passes through the heat shielding device (74) and/or the heat shielding medium (74) conveys heat energy by convection and/or heat radiation.

3. Device according to claim 1 or 2, characterized in that the heat shielding device (74) is configured as a metal shielding element.

4. Device according to claim 1, characterized in that the wall (77) of the cooling pipe (74) is connected with a cooling medium inlet and a cooling medium outlet conduit (78;80), both conduits radially leading to the cooling pipe (70) and extending parallel to each other in this area.

5. Device according to one of claims 1 to 4, characterized in that the closing device (34) is a welding device (35).

6. Device according to one of claims 1 to 5, characterized in that the severing device (24) is a cutting device for ripping open the outer pipe (10), the cutting device (24) comprising a fixed knife (50) with a cutting edge (52) relatively to which the outer pipe (10) is movable and which is directed opposite to the direction of movement of the outer pipe (10).

7. Device according to one of claims 1 to 6, characterized in that the device (28) for keeping the axial opening (60) open comprises spaced-apart holding and guiding parts (64) with surfaces averting each other against which bear the edges (62) of the outer pipe (10) defining the opening (60) in the wall, and where said edges (62) are kept spaced apart, and between which the at least one supply line (12) is adapted to be introduced into the outer pipe (10).

8. Device according to one of claims 1 to 6, characterized in that the expanding device (48) is a conical expanding punch over which the outer pipe (10) is adapted to be placed, and that the holding parts (64) of the device (28) for keeping the the axial opening (60) open is connected with the expanding punch at the end of the latter pointing in the direction of movement (32) of the outer pipe (10).

9. Device according to one of claims 1 to 6, characterized in that the expanding device (48) comprises an expanding punch with a conical expanding section and a further section (54) of generally constant shape, and that said further section (54) comprises an axial opening (58), wherein the expanded outer pipe (10) surrounds said further section (54) keeping said axial opening (58) clear.

10. Device according to one of claims 1 to 9, characterized in that a joining device for joining the edges (62) of the outer pipe (10) defining the opening (60) in the wall is provided.

11. Device according to one of claims 1 to 10, characterized in that the outer pipe (10) is corrugated and that a corrugated pipe shaping machine (90) for moving the corrugated outer pipe (10) and for joining and keeping together the edges (62) of the opening (60) in the wall of the corrugated outer pipe (10) is provided downstream of the expanding device (48) as seen in the direction of movement (32).

12. Device according to one of claims 1 to 11, characterized in that the outer pipe (10) has a round or polygonal cross-section.

13. Device according to one of claims 1 to 12, characterized in that a heat-insulated inner pipe designed for medium transport is adapted to be introduced into the outer pipe (10).

14. Device according to one of claims 1 to 12, characterized in that in addition to an inner pipe (12) designed for medium transport a detection conduit designed in particular for contactless detection of the installed outer pipe (10) is adapted to be introduced into the outer pipe (10).

## Revendications

1. Dispositif pour fabriquer une canalisation tube-dans-tube, constitué par au moins une canalisation d'alimentation (12) de préférence flexible, notamment un tube intérieur guidant un fluide, qui est entouré(e) avec jeu par un tube extérieur en matière plastique (10) notamment flexible, comportant
- un dispositif de séparation (24) pour séparer la paroi du tube extérieur (10) essentiellement dans la direction de l'axe longitudinal,
- un dispositif d'élargissement (26) pour élargir le tube extérieur séparé (10) en formant une ouverture axiale de paroi (60),
- un dispositif de maintien à l'état ouvert (28) servant à maintenir ouverte l'ouverture axiale de paroi (60) du tube extérieur (10), la au moins une canalisation d'alimentation (12) pouvant être introduite dans le tube extérieur (10) par l'ouverture de paroi (60) maintenue ouverte, et
- un dispositif de fermeture (34) servant à fermer l'ouverture axiale de paroi (60) du tube extérieur (10) entourant la au moins une canalisation d'alimentation (12), le dispositif de fermeture (34; 70) possédant une source de chaleur (35; 86) servant à chauffer les bords (62) du tube extérieur (10), qui délimitent l'ouverture de paroi (60),
caractérisé en ce
- que le dispositif de fermeture (34; 70) comporte en outre un dispositif formant écran thermique (74), qui s'étend au moins dans la zone comprise entre l'ouverture de paroi (60) et la canalisation d'alimentation (12) et protège cette dernière vis-à-vis de la source de chaleur (86), et dans lequel
- la source de chaleur est une source d'air chaud (86),
- le dispositif formant écran thermique est agencé sous la forme d'un tube creux de refroidissement (74) qui comporte une cavité (76) ouverte des deux côtés et une paroi refroidie (77) et sur lequel on peut déplacer extérieurement le tube extérieur ouvert (10) qui entoure le tube creux de refroidissement (74), et dans la cavité intérieure (76) duquel la canalisation d'alimentation (12) est déplaçable, et
- entre la source d'air chaud (86) et l'écran thermique (74) est prévue une buse plate (82) possédant une ouverture en forme de fente (8) qui s'étend parallèlement au dispositif formant écran thermique (74) et est disposée à distance de ce dernier.

2. Dispositif selon la revendication 1, caractérisé en ce que le dispositif formant écran thermique (74) est parcouru par un fluide de refroidissement et/ou délivre une énergie thermique par convection et/ou rayonnement thermique.

3. Dispositif selon la revendication 1 ou 2, caractérisé en ce que le dispositif formant écran thermique (74) est agencé sous la forme d'un élément de protection en métal.

4. Dispositif selon la revendication 1, caractérisé en ce que la paroi (77) du tube de refroidissement (74) est reliée à une canalisation (78) d'amenée du fluide de refroidissement et à une canalisation (80) d'évacuation du fluide de refroidissement, ces canalisations aboutissant toutes deux radialement au tube de refroidissement (70) et s'étendant parallèlement l'une à l'autre dans cette zone.

5. Dispositif selon l'une des revendications 1 à 4, caractérisé en ce que le dispositif de fermeture (34) est un dispositif de soudage (35).

6. Dispositif selon l'une des revendications 1 à 5, caractérisé en ce que le dispositif de séparation (24) est un dispositif de coupe servant à fendre le tube extérieur (10) et qui possède un couteau fixe (50) possédant une arête de coupe (52), par rapport à laquelle le tube extérieur (10) est déplaçable et qui est tournée dans un sens opposé au déplacement du tube extérieur (10).

7. Dispositif selon l'une des revendications 1 à 6, caractérisé en ce que le dispositif de maintien à l'état ouvert (28) comporte des parties de retenue ou de guidage (64) distantes l'une de l'autre et possédant des surfaces situées à l'opposé l'une de l'autre et sur lesquelles s'appliquent les bords (62) du tube extérieur (10), qui délimitent l'ouverture de paroi (60), et qui sont maintenues à distance et entre lesquelles la au moins une canalisation d'alimentation (12) peut être insérée dans le tube extérieur (10).

8. Dispositif selon l'une des revendications 1 à 6, caractérisé en ce que le dispositif d'élargissement (48) est un mandrin conique d'élargissement, sur lequel le tube extérieur (10) peut être repoussé, et que les parties de retenue (64) du dispositif de maintien à l'état ouvert (28) sont reliées au mandrin d'élargissement, sur l'extrémité de ce dernier qui est orientée dans le sens de déplacement (32) du tube extérieur (10).

9. Dispositif selon l'une des revendications 1 à 6, caractérisé en ce que le dispositif d'élargissement (48) possède un mandrin d'élargissement ayant une section d'élargissement conique et une autre section (54) ayant une forme essentiellement constante, et que l'autre section (54) possède une ouverture axiale (58), le tube extérieur élargi (10) entourant l'autre section (54), tout en maintenant libre cette ouverture axiale (58).

10. Dispositif selon l'une des revendications 1 à 9, caractérisé en ce qu'il est prévu un dispositif de réunion servant à réunir les bords (62) du tube extérieur (10), qui délimitent l'ouverture de paroi (60).

11. Dispositif selon l'une des revendications 1 à 10, caractérisé en ce que le tube extérieur (10) est ondulé et qu'il est prévu, après le dispositif d'élargissement (48) dans le sens de déplacement (32) une machine (90) de formage de tube ondulé servant à déplacer le tube extérieur ondulé (10) et à réunir et maintenir assemblés les bords (62) de l'ouverture de paroi (60) du tube extérieur ondulé (10) .

12. Dispositif selon l'une des revendications 1 à 11, caractérisé en ce que le tube extérieur (10) possède une section transversale circulaire ou une section transversale polygonale.

13. Dispositif selon l'une des revendications 1 à 12, caractérisé en ce qu'un tube intérieur prévu pour le guidage d'un fluide et pourvu d'une isolation thermique peut être inséré dans le tube extérieur (10).

14. Dispositif selon l'une des revendications 1 à 12, caractérisé en ce qu'une canalisation de repérage servant notamment à repérer sans contact le tube extérieur mis en place (10) peut être insérée dans le tube extérieur (10), en plus d'un tube intérieur (12) prévu pour le guidage du fluide.
